# FASCICULE DE BREVET EUROPEEN

(11) **EP 1 874 423 B1**
(45) Date de publication et mention de la délivrance du brevet: **10.12.2008**
(21) Numéro de dépôt: 06709363.3
(22) Date de dépôt: 22.02.2006
(51) Int. Cl.: B01D 15/08, G01N 30/32, G01N 30/34, B01F 15/02, B01F 13/06

(54) **PROCEDE ET DISPOSITIF POUR DELIVRER A HAUTE PRESSION UN MELANGE DE FLUIDES**
VERFAHREN UND VORRICHTUNG ZUR HOCHDRUCKAUSGABE EINER FLUIDMISCHUNG
METHOD AND DEVICE FOR THE HIGH-PRESSURE DELIVERY OF A FLUID MIXTURE

(30) Priorité: 25.02.2005 FR 0501961
(43) Date de publication de la demande: 09.01.2008
(73) Titulaire: Pic Solution, 84491 Avignon (FR)
(72) Inventeur: SHAIMI, Mohamed, F-84140 Montfavet (FR)
(74) Mandataire: Somnier, Jean-Louis
(86) Numéro de dépôt international: PCT/FR2006/000402
(87) Numéro de publication internationale: WO 2006/090063

(56) Documents cités:
- DE-A1- 19 625 648
- US-A- 4 311 586
- US-A- 5 196 575
- US-A- 5 198 115
- US-A1- 2002 144 949
- US-A1- 2004 018 099
- US-B1- 6 743 356

## Description

La présente invention concerne le domaine général de la circulation et de la fourniture de fluides et, en particulier, de la fourniture de mélange de fluides à haute pression.

Plus précisément, l'invention concerne, selon un premier de ses aspects, un procédé pour délivrer à haute pression un mélange d'au moins un premier et un second fluides, ce procédé comprenant les opérations consistant à former un mélange des fluides dans une zone de mélange dans laquelle règne une pression inférieure à la haute pression, et à porter à la haute pression les fluides préalablement mélangés.

Actuellement, pour réaliser un mélange à haute pression de plusieurs fluides, il est courant d'utiliser autant de pompes haute pression que de fluides, le mélange s'effectuant en aval des pompes. Ce système permet de régler les pourcentages des différents fluides dans le mélange final mais l'utilisation de plusieurs pompes haute pression rend le procédé coûteux.

Dans le brevet US 4 311 586, un mélange de trois solvants est réalisé par un montage d'une pompe haute pression en aval de trois pompes basse pression montées en parallèle et recevant chacune un des trois solvants. Cependant, ce montage nécessite autant de pompes basse pression que de solvants.

La présente invention a donc pour but de proposer un procédé amélioré de fourniture d'un mélange de fluides à haute pression.

A cette fin, le procédé de l'invention, par ailleurs conforme à la définition générique qu'en donne le préambule ci-dessus, est essentiellement **caractérisé en ce que** le premier fluide est admis dans la zone de mélange grâce à une opération de pompage réalisée par une pompe haute pression placée en aval de ladite zone (m) de mélange.

Selon une version avantageuse de l'invention, le premier fluide est pompé à partir d'un récipient dans lequel il est soumis à une pression supérieure à celles qui règnent au sein des récipients qui contiennent respectivement chaque second fluide.

Dans un autre mode de réalisation de l'invention, le premier fluide est pompé à partir d'un récipient dans lequel il est soumis à une pression égale à celles qui règnent au sein des récipients qui contiennent respectivement chaque second fluide, et en ce que chaque second fluide subit une contre-pression avant son arrivée dans la zone de mélange.

Selon un mode particulier de réalisation de l'invention, le premier fluide est tout solvant pouvant être utilisé en chromatographie en phase supercritique, tel que le dioxyde de carbone, et le deuxième fluide est un agent modificateur.

On entend par agent modificateur un co-solvant du premier fluide, qui est constitué d'un solvant liquide ou d'un mélange de solvants liquide.

De manière avantageuse, la haute pression est comprise entre 30 et 300 bars, de préférence entre 100 et 300 bars, et la pression inférieure à la haute pression est comprise entre 1 et 100 bars et, de préférence, est de l'ordre de 50 bars.

L'invention concerne également un dispositif utilisant une seule pompe haute pression pour délivrer à sa sortie un mélange d'au moins un premier et un second fluides, chaque second fluide étant délivré à l'entrée de ladite pompe haute pression par chacun une pompe basse pression ayant une pression de refoulement inférieure à la pression de refoulement de la pompe haute pression, **caractérisé en ce que** chaque premier fluide est seulement pompé par la pompe haute pression placée en aval de la zone de mélange.

L'invention présente donc l'avantage de réduire les coûts de mise en oeuvre d'un dispositif de fourniture haute pression d'un mélange de fluides en limitant le nombre d'appareils de pompage nécessaires.

Ainsi, le dispositif selon l'invention permet d'obtenir une bonne reproductibilité du débit du deuxième fluide car la pompe basse pression fonctionne à pression de refoulement constante, qui est la pression d'aspiration de la pompe à haute pression.

De préférence, chaque premier fluide est pompé à partir d'un récipient dans lequel il est soumis à une pression supérieure à celles qui règnent au sein des récipients qui contiennent respectivement chaque second fluide.

Il est possible aussi que chaque premier fluide soit pompé à partir d'un récipient dans lequel il est soumis à une pression égale à celles qui règnent au sein des récipients qui contiennent respectivement chaque second fluide, et qu'un clapet taré ou un dispositif de contre-pression soit installé en aval de chaque pompe basse pression, en amont d'un noeud où se rejoignent les fluides à mélanger.

Selon une version avantageuse de l'invention, la pompe haute pression a une pression de refoulement comprise entre 30 et 300 bars, de préférence entre 100 et 300 bars, et chaque pompe basse pression a une pression de refoulement comprise entre 1 et 100 bars, de préférence de l'ordre de 50 bars.

L'invention concerne encore l'application du procédé selon l'invention à la chromatographie en phase supercritique, à l'extraction avec un fluide supercritique ou à la chromatographie liquide.

Dans ces exemples d'application du procédé selon l'invention, un mélange de solvants est réalisé et délivré selon l'invention et constitue la phase mobile de la chromatographie.

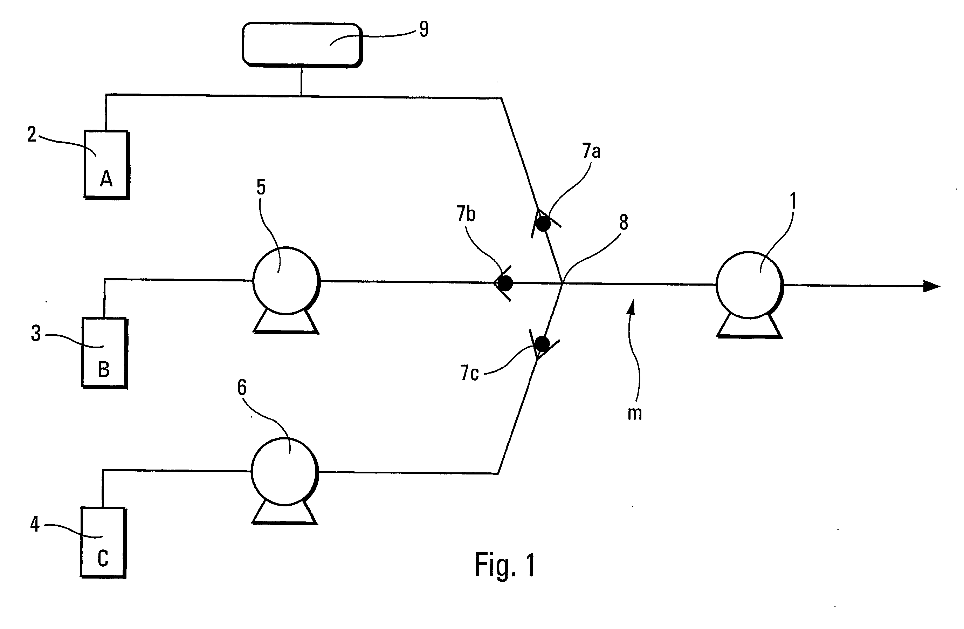

D'autres avantages et particularités de l'invention apparaîtront à la lecture de la description détaillée qui en est faite ci-après, à titre indicatif et nullement limitatif, en référence à la figure 1 qui représente schématiquement un dispositif pour la mise en oeuvre du procédé selon l'invention dans le cas du mélange de trois fluides.

Une pompe 1 haute pression reçoit trois fluides A, B et C mélangés en amont de la pompe 1 haute pression dans la zone m de mélange.

Un premier fluide A est conservé sous une pression déterminée dans un récipient 2. Il est directement prélevé de ce récipient par pompage par la pompe 1 haute pression. Le débit à la sortie du récipient 2 dépend de la pression d'aspiration de la pompe 1 à haute pression.

Deux autres fluides B et C sont prélevés chacun d'un récipient 3, 4 par pompage à l'aide d'une pompe 5, 6 basse pression.

Ainsi, le procédé selon l'invention présente l'avantage de supprimer, pour le mélange de trois fluides, le besoin en trois pompes basse pression. Deux suffisent.

Des clapets anti-retour 7a, 7b, 7c peuvent également être installés pour chaque fluide en amont du noeud 8 au niveau duquel les trois fluides A, B et C se mélangent.

Selon un mode de réalisation préféré, la pression P_{A} à laquelle se trouve le fluide A dans le récipient 2 est supérieure aux pressions P_{B} et P_{C} auxquelles sont soumis les seconds fluides B et C dans leurs récipients respectifs 3 et 4.

Si P_{A} est égale à P_{B} et/ou P_{C}, pour éviter que la pompe 1 haute pression ne pompe à la fois les fluides A, B et/ou C, une contre-pression doit être exercée en aval des pompes 5 et/ou 6 et en amont du noeud 8. On peut ainsi prévoir que les clapets 7b et/ou 7c soient des clapets tarés.

On peut encore, si on le souhaite, ajouter un appareil 9 de mesure du débit à la sortie du récipient 2 contenant le premier fluide A afin de s'assurer du bon réglage du dispositif de pompage et, le cas échéant, de modifier ce réglage.

Une telle modification peut porter sur la pompe 1 haute pression. Par exemple, l'appareil 9 de mesure peut être connecté à la pompe 1 haute pression et le réglage de celle-ci peut se faire de manière automatique par un traitement informatique du type boucle de régulation par identification des paramètres (PID).

De manière avantageuse, un amortisseur de pulsation peut être installé entre le clapet 7a et le noeud 8 afin d'amortir les chocs de pression qui découleraient d'une fermeture impromptue de la pompe 1 haute pression. Le procédé selon l'invention peut en particulier être utilisé en chromatographie pour le mélange de plusieurs solvants. Par exemple, il est mis en oeuvre dans un procédé de chromatographie en phase supercritique.

On peut avoir besoin dans ce cas de mélanger un premier fluide A à un deuxième fluide B, respectivement un solvant et un co-solvant ou agent modificateur. Le solvant est tout fluide pouvant être utilisé en chromatographie en phase supercritique, tel que le dioxyde de carbone CO₂.

Par exemple, le CO₂ est à une pression de 50 bars dans le récipient 2 et la pompe 5 pour le co-solvant est à une pression de refoulement égale à la pression à laquelle est soumis le récipient 2.

Avec le procédé selon l'invention, on obtient une meilleure reproductibilité du débit de pompage du modificateur car la pression de refoulement de la pompe à modificateur est constante. Avec cette amélioration, la pompe pour le solvant sert aussi de chambre de mélange solvant-modificateur. De plus, le rendement de la pompe à solvant, soit de la pompe 1 haute pression, s'en trouve amélioré car le fluide entrant dans la pompe contient un co-solvant liquide et est donc moins compressible.

Le procédé selon l'invention peut encore être utile dans une extraction avec un fluide supercritique. On entend par fluide supercritique tout fluide susceptible, dans certaines conditions de température et de pression, d'être à l'état supercritique.

Comme en chromatographie en phase supercritique, l'extraction avec un fluide supercritique met en jeu un solvant tel que le dioxyde de carbone CO₂ et un co-solvant jouant le rôle d'agent modificateur. Ces solvant et co-solvant peuvent avantageusement être mélangés par pompage haute pression selon le procédé de l'invention.

En chromatographie liquide, on peut avoir besoin de mélanger deux solvants. Le mélange peut se faire en mode isocratique ou en mode gradient. Par exemple, un solvant liquide se trouve dans le récipient 2 à une pression de l'ordre de 3 bars et la pompe 5 basse pression pour le co-solvant fonctionne à une pression de refoulement égale à la pression à laquelle est soumis le récipient 2, soit une pression de refoulement de l'ordre de 3 bars.

Le procédé selon l'invention peut encore être utilisé dans toute application nécessitant un dispositif de pompage pour mélanger plusieurs fluides et délivrer le mélange obtenu.

La mise en oeuvre du procédé selon l'invention constitue un moyen de diminuer les coûts engendrés par la mise en place d'un dispositif classique de pompage pour délivrer un mélange de fluides.

## Revendications

1. Procédé pour délivrer à haute pression un mélange d'au moins un premier et un second fluides (A, B, C), ce procédé comprenant les opérations consistant à former un mélange des fluides dans une zone (m) de mélange dans laquelle règne une pression inférieure à la haute pression, et à porter à la haute pression les fluides (A, B, C) préalablement mélangés, **caractérisé en ce que** le premier fluide (A) est admis dans la zone (m) de mélange grâce à une opération de pompage réalisée par une pompe (1) haute pression placée en aval de ladite zone (m) de mélange.

2. Procédé selon la revendication 1, **caractérisé en ce que** le premier fluide (A) est pompé à partir d'un récipient (2) dans lequel il est soumis à une pression supérieure à celles qui règnent au sein des récipients (3, 4) qui contiennent respectivement chaque second fluide (B, C).

3. Procédé selon la revendication 1, **caractérisé en ce que** le premier fluide (A) est pompé à partir d'un récipient (2) dans lequel il est soumis à une pression égale à celles qui règnent au sein des récipients (3, 4) qui contiennent respectivement chaque second fluide (B, C), et **en ce que** chaque second fluide (B, C) subit une contre-pression avant son arrivée dans la zone (m) de mélange.

4. procédé selon l'une quelconque des revendications 1 à 3, dans lequel le premier fluide (A) est tout solvant pouvant être utilisé en chromatographie en phase supercritique, tel que le dioxyde de carbone CO₂, et le deuxième fluide (B) est un agent modificateur.

5. procédé selon l'une quelconque des revendications 1 à 4, dans lequel la haute pression est comprise entre 30 et 300 bars, de préférence entre 100 et 300 bars, et la pression inférieure à la haute pression est comprise entre 1 et 100 bars et, de préférence, est de l'ordre de 50 bars.

6. Dispositif utilisant une seule pompe (1) haute pression pour délivrer à sa sortie un mélange d'au moins un premier et un second fluides (A, B, C), chaque second fluide étant délivré à l'entrée de ladite pompe (1) haute pression par chacun une pompe basse pression ayant une pression de refoulement inférieure à la pression de refoulement de la pompe haute pression, **caractérisé en ce que** chaque premier fluide est seulement pompé par la pompe (1) haute pression placée en aval de la zone (m) de mélange.

7. Dispositif selon la revendication 6, dans lequel chaque premier fluide est pompé à partir d'un récipient (2) dans lequel il est soumis à une pression supérieure à celles qui règnent au sein des récipients (3, 4) qui contiennent respectivement chaque second fluide (B, C).

8. Dispositif selon la revendication 6, dans lequel chaque premier fluide est pompé à partir d'un récipient (2) dans lequel il est soumis à une pression égale à celles qui règnent au sein des récipients (3, 4) qui contiennent respectivement chaque second fluide (B, C), et dans lequel un clapet taré ou un dispositif de contre-pression est installé en aval de chaque pompe basse pression, en amont d'un noeud (8) où se rejoignent les fluides à mélanger.

9. Dispositif selon l'une quelconque des revendications 6 à 8, dans lequel la pompe (1) haute pression a une pression de refoulement comprise entre 30 et 300 bars, de préférence entre 100 et 300 bars, et chaque pompe (5, 6) basse pression a une pression de refoulement comprise entre 1 et 100 bars, de préférence de l'ordre de 50 bars.

10. Application du procédé selon l'une quelconque des revendications 1 à 5 à la chromatographie en phase supercritique ou à l'extraction avec un fluide supercritique.

11. Application du procédé selon l'une quelconque des revendications 1 à 3 et 5 à la chromatographie liquide.

## Claims

1. A process for high-pressure delivery of a mixture of at least a first and a second fluid (A, B, C), this process comprising operations consisting of forming a mixture of the fluids in a mixing zone (m) in which a pressure less than the high pressure prevails, and of bringing the previously mixed fluids (A, B, C) to high pressure, **characterised in that** the first fluid (A) is admitted to the mixing zone (m) owing to a pumping procedure performed by a high-pressure pump (1) placed downstream of said mixing zone (m).

2. The process as claimed in Claim 1, **characterised in that** the first fluid (A) is pumped from a container (2) in which it is subjected to a pressure greater than those which prevail inside the containers (3, 4) which contain respectively each second fluid (B, C).

3. The process as claimed in Claim 1, **characterised in that** the first fluid (A) is pumped from a container (2) in which it is subjected to a pressure equal to those prevailing inside the containers (3, 4) which contain respectively each second fluid (B, C), and **in that** each second fluid (B, C) undergoes counter-pressure before arriving in the mixing zone (m).

4. The process as claimed in any one of Claims 1 to 3, in which the first fluid (A) is any solvent able to be utilised in chromatography in supercritical phase, such as carbon dioxide CO₂, and the second fluid (B) is a modifying agent.

5. The process as claimed in any one of Claims 1 to 4, in which the high pressure is between 30 and 300 bars, preferably between 100 and 300 bars, and the pressure less than the high pressure is between 1 and 100 bars and, preferably, is of the order of 50 bars.

6. A device making use of a single high-pressure pump (1) to deliver to its outlet a mixture of at least a first and second fluid (A, B, C), each second fluid being delivered to the inlet of said high-pressure pump (1) each by a low-pressure pump having a return pressure less than the return pressure of the high-pressure pump, **characterised in that** each first fluid is pumped only by the high-pressure pump (1) placed downstream of the mixing zone (m).

7. The device as claimed in Claim 6, in which each first fluid is pumped from a container (2) in which it is subjected to a pressure greater than those prevailing inside the containers (3, 4) which contain respectively each second fluid (B, C).

8. The device as claimed in Claim 6, in which each first fluid is pumped from a container (2) in which it is subjected to a pressure equal to those prevailing inside the containers (3, 4) which contain respectively each second fluid (B, C), and in which a calibrated valve or a counter-pressure device is installed downstream of each low-pressure pump, upstream of a node (8) where the fluids to be mixed are combined.

9. The device as claimed in any one of Claims 6 to 8, in which the high-pressure pump (1) has a return pressure of between 30 and 300 bars, preferably between 100 and 300 bars, and each low-pressure pump (5, 6) has a return pressure of between 1 and 100 bars, preferably of the order of 50 bars.

10. Application of the process as claimed in any one of Claims 1 to 5 to chromatography in supercritical phase or to extraction with a supercritical fluid.

11. Application of the process as claimed in any one of Claims 1 to 3 and 5 to liquid chromatography.

## Patentansprüche

1. Verfahren zur Hochdruck-Förderung eines Gemischs aus mindestens einem ersten und einem zweiten Fluid (A, B, C), umfassend die Schritte: Bildung eines Fluidgemischs in einem Mischbereich (m), in dem ein Druck herrscht, der niedriger ist als der Hochdruck, und Setzen der zuvor gemischten Fluide (A, B, C) unter diesen Hochdruck, **dadurch gekennzeichnet, dass** das erste Fluid (A) durch einen Pumpvorgang in den Mischbereich (m) gelangt, der mit Hilfe einer stromabwärts des Mischbereichs (m) angeordneten Hochdruckpumpe (1) durchgeführt wird.

2. Verfahren gemäß Anspruch 1, **dadurch gekennzeichnet, dass** das erste Fluid (A) aus einem Behälter (2) abgepumpt wird, in dem es unter einem Druck steht, der höher ist als die, die innerhalb der Behälter (3, 4) herrschen, die jeweils eines der zweiten Fluide (B, C) enthalten.

3. Verfahren gemäß Anspruch 1, **dadurch gekennzeichnet, dass** das erste Fluid (A) aus einem Behälter (2) abgepumpt wird, in dem es unter einem Druck steht, der genauso hoch ist wie die, die innerhalb der Behälter (3, 4) herrschen, die jeweils eines der zweiten Fluide (B, C) enthalten, und dass jedes zweite Fluid (B, C) vor seiner Ankunft im Mischbereich (m) einem Gegendruck ausgesetzt ist.

4. Verfahren gemäß einem der Ansprüche 1 bis 3, wobei es sich bei dem ersten Fluid (A) um jedes Lösungsmittel handelt, das in der superkritischen Chromatographie eingesetzt werden kann, wie zum Beispiel Kohlendioxid CO₂, und bei dem zweiten Fluid (B) um einen Modifikator handelt.

5. Verfahren gemäß einem der Ansprüche 1 bis 4, wobei der Hochdruck zwischen 30 und 300 bar, vorzugsweise zwischen 100 und 300 bar liegt, und der Druck, der niedriger ist als der Hochdruck, zwischen 1 und 100 bar und vorzugsweise im Bereich von 50 bar liegt.

6. Vorrichtung mit einer einzigen Hochdruckpumpe (1) zur Förderung eines Gemischs aus mindestens einem ersten und einem zweiten Fluid (A, B, C) zu ihrem Auslass, wobei jedes zweite Fluid mit Hilfe jeweils einer Niedrigdruckpumpe zum Einlass der Hochdruckpumpe (1) gefördert wird, welche Nicdrigdruckpumpe einen Verdrängungsdruck hat, der niedriger ist als der Verdrängungsdruck der Hochdruckpumpe, **dadurch gekennzeichnet, dass** jedes erste Fluid nur mit Hilfe der Hochdruckpumpe (1) gepumpt wird, die stromabwärts des Mischbereichs (m) angeordnet ist.

7. Vorrichtung gemäß Anspruch 6, wobei jedes erste Fluid aus einem Behälter (2) abgepumpt wird, in dem es unter einem Druck steht, der höher ist als die, die im Innern der Behälter (3, 4) herrschen, die jeweils eines der zweiten Fluide (B, C) enthalten.

8. Vorrichtung gemäß Anspruch 6, wobei jedes erste Fluid aus einem Behälter (2) abgepumpt wird, in dem es unter einem Druck steht, der genauso hoch ist wie die, die im Innern der Behälter (3, 4) herrschen, die jeweils eines der zweiten Fluide (B, C) enthalten, und wobei stromabwärts jeder Niedrigdruckpumpe bzw. stromaufwärts eines Knotens (8), an dem sich die zu mischenden Fluide treffen, ein kalibriertes Ventil oder eine Gegendruckvorrichtung installiert ist.

9. Vorrichtung gemäß einem der Ansprüche 6 bis 8, wobei die Hochdruckpumpe (1) einen Verdrängungsdruck zwischen 30 und 300 bar, vorzugsweise zwischen 100 und 300 bar hat, und jede Niedrigdruckpumpe (5, 6) einen Verdrängungsdruck zwischen 1 und 100 bar, vorzugsweise im Bereich von 50 bar hat.

10. Anwendung des Verfahrens gemäß einem der Ansprüche 1 bis 5 in der superkritischen Chromatographie oder zur Extraktion mit einem superkritischen Fluid.

11. Anwendung des Verfahrens gemäß einem der Ansprüche 1 bis 3 und 5 in der Flüssigkeitschromatographie.
